Europäisches Patentamt

European Patent Office

Office européen des brevets

(11) Veröffentlichungsnummer: **0 308 784 B1**

(12) **EUROPÄISCHE PATENTSCHRIFT**

(45) Veröffentlichungstag der Patentschrift: **08.01.92**

(51) Int. Cl.⁵: **F16C 23/04, F16C 27/02**

(21) Anmeldenummer: **88114949.6**

(22) Anmeldetag: **13.09.88**

Die Akte enthält technische Angaben, die nach dem Eingang der Anmeldung eingereicht wurden und die nicht in dieser Patentschrift enthalten sind.

(54) **Klemmbrille für die Halterung von Pendelgleitlagern.**

(30) Priorität: **25.09.87 DE 8712959 U**

(43) Veröffentlichungstag der Anmeldung:
**29.03.89 Patentblatt 89/13**

(45) Bekanntmachung des Hinweises auf die Patenterteilung:
**08.01.92 Patentblatt 92/02**

(84) Benannte Vertragsstaaten:
**CH DE ES FR GB IT LI**

(56) Entgegenhaltungen:
**DE-U- 7 302 251**
**DE-U- 8 325 743**
**DE-U- 8 419 027**

(73) Patentinhaber: **SIEMENS AKTIENGESELL-SCHAFT**
**Wittelsbacherplatz 2**
**W-8000 München 2(DE)**

Patentinhaber: **ING. LANG & MENKE GMBH**
**Altenaer Strasse 3**
**W-5870 Hemer-Westig(DE)**

(72) Erfinder: **Adam, Peter**
**Allerseeweg 25**
**W-8706 Höchberg(DE)**
Erfinder: **Hoffmann, Ferdinand**
**Auf dem Schilk 4**
**W-5870 Hemer(DE)**
Erfinder: **Rüb, Michael, Dipl.-Ing. (FH)**
**Semmelstrasse 62**
**W-8700 Würzburg(DE)**

(74) Vertreter: **Fuchs, Franz-Josef, Dr.-Ing. et al**
**Postfach 22 13 17**
**W-8000 München 22(DE)**

## Beschreibung

Die Erfindung bezieht sich auf eine Klemmbrille zur Halterung von Pendelgleitlagern, insbesondere für Elektromotoren, mit einem größeren Außendurchmesser als die Aufnahmeöffnung, deren Klemmrand sowie deren radial nach innen weisende Federlappen entgegengesetzt zur Einsteckrichtung der Klemmbrille in die Aufnahmeöffnung abgekröpft sind.

Bei einer bekannten derartigen Klemmbrille gemäß DE-U-84 19 027.2 erstrecken sich die Federlappen von einem Bodenabschnitt in Richtung auf die Aufnahmeöffnung. Der Bodenabschnitt führt auf der gegenüberliegenden Seite zum Klemmrand. Weil die Federlappen als Abschnitte des Bodens ausgebildet sind, ist deren Länge relativ gering und dementsprechend auch die Federwirkung sehr klein.

Der Erfindung liegt die Aufgabe zugrunde, die Federwirkung der Federlappen wesentlich zu erhöhen und gegebenenfalls die Klemmbrille für eine Ölrückführung mitbenutzen zu können.

Die Aufgabe wird bei einer Klemmbrille der eingangs genannten Art erfindungsgemäß durch die Lehre des Anspruchs 1 gelöst; vorteilhafte Ausgestaltungen der Erfindung sind jeweils Gegenstand der Unteransprüche.

Die Federlappen der erfindungsgemäßen Ausführung erstrecken sich somit vom äußeren Rand der Klemmbrille aus nach innen, wodurch die Federwirkung entscheidend erhöht wird.

Nach einer besonders bevorzugten Ausführungsform der Erfindung weisen bei einer dem Durchmesser des Pendelgleitlagers angepaßten Durchstecköffnung die freien abgekröpften Enden der Federlappen in Ruhestellung einen geringfügig kleineren lichten Durchmesser auf als die Durchstecköffnung.

Zweckmäßigerweise ist die Wulst beidseitig der Abbiegungen der Federlappen ausgeschnitten. Auf diese Weise ist die volle Federwirkung bis zu den Wurzeln der Federlappen gewährleistet.

Bevorzugterweise ist der untere Bereich der Wulst als Ölaufnahmerille ausgebildet. Diese Wulst hat annähernd einen V-förmigen Querschnitt.

Vorzugsweise ist der Übergang von der Wulst zur Durchstecköffnung in Einsteckrichtung abgerundet; die Federlappen verlaufen zweckmäßigerweise annähernd parallel zu diesem abgerundeten Übergangsabschnitt und sind mit ihren inneren freien Enden auf die Durchstecköffnung gerichtet.

Auf der Zeichnung ist eine beispielsweise Ausführungsform der Erfindung dargestellt; sie wird nachfolgend näher beschrieben. Es zeigt:

FIG 1      eine Draufsicht auf eine Ausführungsform der Erfindung,

FIG 2      einen Schnitt gemäß Linie 2-2 in FIG 1 und

FIG 3      einen Teilschnitt gemäß Linie 3-3 in FIG 1 in vergrößertem Maßstab.

Eine Klemmbrille 1 weist eine innere runde Durchstecköffnung 2 auf, deren freier Innenrand 3 einem nicht gezeigten Kalottengleitlager angepaßt ist. Die Klemmbrille 1 wird in Einsteckrichtung 6 gegen das Kalottenlager in die Aufnahmeöffnung eingeschoben.

Der Übergangsabschnitt 7 zwischen der Durchstecköffnung 2 und dem freien Außenrand 8 der Klemmbrille 2 ist leicht konvex gekrümmt und weist eine ringförmige Wulst 9 auf, auf die in Richtung nach radial außen ein Klemmrand 10 folgt, so daß im Bereich des Übergangsabschnitts 7 im Betrieb radial nach außen weggeschleudertes Öl aufgefangen werden kann.

Über den Umfang der Klemmbrille gleichmäßig verteilt sind beim Ausführungsbeispiel sechs Federlappen 20 vorgesehen, die in gleicher Breite und Stärke radial nach innen ragen und an ihren freien Enden zur Durchstecköffnung 2 gerichtete abgekröpfte Enden 21 aufweisen. Der Durchmesser des von den abgekröpften Enden 21 gebildeten Kreises ist in Ruhestellung der Klemmbrille 1 nur geringfügig kleiner als der Durchmesser der Durchstecköffnung 2.

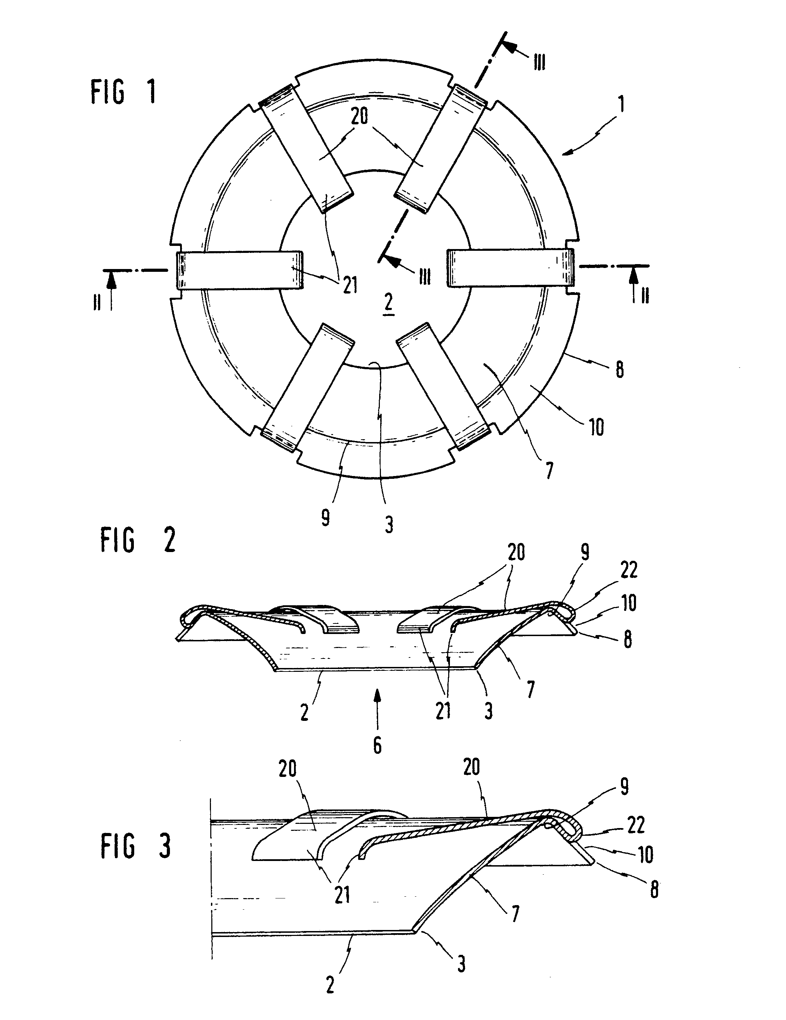

Die Federlappen 20 sind einteilig mit den anderen Abschnitten der Klemmbrille 2 verbunden. Die Federlappen 20 sind vom Übergangsabschnitt 7 kommend an der Abbiegestelle 22 um annähernd 180° abgebogen, liegen auf der Wulst 9 auf und verlaufen dann, wie insbesondere aus FIG 3 ersichtlich, annähernd in radialer Richtung zur Mitte der Durchstecköffnung 2.

Wie bereits oben erwähnt, ist die Klemmbrille einstückig; sie ist aus einem Blech, z.b. Federblech, gestanzt; die Federlappen sind in die dargestellte Stellung um ca. 180° abgebogen.

## Patentansprüche

1. Klemmbrille (1) zur Halterung von Pendelgleitlagern, insbesondere für Elektromotoren, mit einem größeren Außendurchmesser als die Aufnahmeöffnung für die Klemmbrille und mit einem Klemmrand (10) sowie mit radial nach innen weisenden Federlappen (20), die ebenso wie der Klemmrand (10) entgegengesetzt zur Einsteckrichtung (6) der Klemmbrille (1) in die Aufnahmeöffnung abgekröpft sind, **dadurch gekennzeichnet,** daß die Federlappen (20) vom äußeren Teil des Klemmrandes (10) ausgehend über eine den Klemmrand (10) begrenzende Wulst (9) hinweg nach innen abgebogen sind.

2. Klemmbrille mit einer dem Durchmesser des Pendelgleitlagers angepaßten inneren Durchstecköffnung (2) nach Anspruch 1, **dadurch gekennzeichnet,** daß die freien abgekröpften Enden (21) der Federlappen (20) in Ruhestellung einen gering größeren lichten Durchmesser aufweisen als die Durchstecköffnung (2).

3. Klemmbrille nach Anspruch 1 oder 2, **dadurch gekennzeichnet,** daß die Wulst (9) beidseitig der Abbiegung der Federlappen (20) ausgeschnitten ist.

4. Klemmbrille nach einem der Ansprüche 1 bis 3, **gekennzeichnet durch** einen in Einsteckrichtung (6) der Klemmbrille abgerundeten Übergangsabschnitt (7) von der Wulst (9) zur Durchstecköffnung (2).

5. Klemmbrille nach einem der Ansprüche 1 bis 4, **dadurch gekennzeichnet,** daß der untere Bereich der Wulst (9) als Ölaufnahmerille ausgebildet ist.

6. Klemmbrille nach Anspruch 4, **dadurch gekennzeichnet,** daß die Federlappen (20) annähernd parallel zu dem abgerundeten Übergangsabschnitt (7) verlaufen und mit ihren inneren freien Enden (21) auf die Durchstecköffnung (2) gerichtet sind.

## Claims

1. A clamping plate (1) for holding self-aligning friction bearings, in particular for electric motors, with a larger outer diameter than the receiving opening for the clamping plate and with a clamping rim (10) as well as with radially inwardly pointing spring tabs (20), which, just like the clamping rim (10), are offset in a direction opposing the plug-in direction (6) of the clamping plate (1) into the receiving opening, characterised in that the Spring tabs (20), emanating from the outer part of the clamping rim (10), are inwardly bent over a bead (9) which limits the clamping rim (10).

2. A clamping plate with an inner plug-through opening (2) adapted to the diameter of the self-aligning friction bearing according to claim 1, characterised in that the free offset ends (21) of the spring tabs (20) in the resting position have a slightly larger inside diameter than the plug-through opening (2).

3. A clamping plate according to claim 1 or 2, characterised in that the bead (9) is cut out on both sides of the bent part of the spring tabs (20).

4. A clamping plate according to one of claims 1 to 3, characterised by a transition section (7) from the bead (9) to the plug-through opening, rounded off in the plug-in direction (6) of the clamping plate.

5. A clamping plate according to one of claims 1 to 4, characterised in that the lower region of the bead (9) is formed as an oil receiving groove.

6. A clamping plate according to claim 4, characterised in that the spring tabs (20) extend approximately parallel the rounded-off transition section (7) and are directed with their inner free ends (21) towards the plug-through Opening (2).

## Revendications

1. Bride de serrage (1) pour le montage de paliers lisses à rotule, notamment pour des moteurs électriques, ayant un diamètre extérieur plus grand que l'ouverture de réception de la bride de serrage et un bord de serrage (10), ainsi que des pattes élastiques (20) qui sont tournées radialement vers l'intérieur et qui, tout comme le bord de serrage (10), sont coudées dans le sens opposé au sens d'engagement (6) de la bride de serrage (1) dans l'ouverture de réception, caractérisée en ce que les pattes élastiques (20) sont, à partir de la partie extérieure du bord de serrage (10), recourbées vers l'intérieur, au-delà d'un bourrelet (9) délimitant le bord de serrage (10).

2. Bride de serrage ayant une ouverture intérieure de passage (2) adaptée au diamètre du palier lisse à rotule suivant la revendication 1, caractérisée en ce que les extrémités libres (21) coudées des pattes élastiques (20) présentent, en position de repos, un diamètre intérieur un peu plus grand que l'ouverture de passage (2).

3. Bride de serrage suivant la revendication 1 ou 2, caractérisée en ce que le bourrelet (9) est découpé de part et d'autre de la partie recourbée des pattes élastiques (20).

4. Bride de serrage suivant l'une des revendications 1 à 3, caractérisée par une section de transition (7) arrondie, dans le sens d'engagement (6) de la bride de serrage du bourrelet (9) a l'ouverture de passage (2).

5. Bride de passage suivant l'une des revendications 1 à 4, caractérisée en ce que la partie inférieure du bourrelet (9) est constituée en gorge de réception d'huile.

6. Bride de serrage suivant la revendication 4, caractérisée en ce que les pattes élastiques (20) s'étendent à peu près parallèlement à la section de transition (7) arrondie et leurs extrémités intérieures (21) libres sont dirigées sur l'ouverture de passage (2).

FIG 1

20

21

2

III

III

II

II

1

8

10

7

9

3

FIG 2

20

9

22

10

8

2

21

3

7

6

FIG 3

20

20

9

22

10

8

21

7

3

2